Europäisches Patentamt

(19) European Patent Office

Office européen des brevets

(11) Publication number: **0 242 209**
**B1**

(12) **EUROPEAN PATENT SPECIFICATION**

(45) Date of publication of the patent specification:
27.06.90

(51) Int. Cl.⁵: **B01D 69/12**, B01D 71/02

(21) Application number: 87303345.0

(22) Date of filing: 15.04.87

(54) Composite membranes.

(30) Priority: 16.04.86 GB 8609248

(43) Date of publication of application:
21.10.87 Bulletin 87/43

(45) Publication of the grant of the patent:
27.06.90 Bulletin 90/26

(84) Designated Contracting States:
BE CH DE ES FR GB IT LI NL SE

(56) References cited:
EP-A- 0 015 149
EP-A- 0 178 831
EP-A- 0 224 444
DE-A- 2 820 057
DE-A- 3 013 897
GB-A- 1 173 179
US-A- 3 692 087

THIN SOLID FILMS, vol. 99, 1983, pages 265-269,
Elsevier Sequoia, NL; K. HECKMANN et al.:
"Hyperfiltration through cross-linked monolayers"
Idem
PATENT ABSTRACTS OF JAPAN, vol. 3,
no. 27 (C-39), 7th March 1979, page 65 C39; &
JP-A-54 2276 (MITSUBISHI KASEI KOGYO
K.K.) 01-09-1979

(73) Proprietor: ALCAN INTERNATIONAL LIMITED,
1188 Sherbrooke Street West, Montreal Quebec
H3A 3G2(CA)

(72) Inventor: Furneaux, Robin Christopher, Lady Barn The
Level, Shenington Banbury Oxon(GB)
Inventor: Davidson, Alexander Philip, Wood Farm House
Whichford, Shipston-on-Stour Warwickshire(GB)

(74) Representative: Pennant, Pyers et al, Stevens, Hewlett &
Perkins 5 Quality Court Chancery Lane, London,
WC2A 1HZ(GB)

(56) References cited: (continuation)
The file contains technical information submitted after
the application was filed and not included in this
specification

## Description

For certain separation processes, various composite membranes have been developed. These are aimed at applications which include gas separation, liquid/liquid separation (pervaporation), reverse osmosis and ultrafiltration. These composite membranes comprise a porous membrane as a support for a permeable or microporous film. For gas separation and pervaporation, the film is selectively permeable to one constituent of the feed mixture. Reverse osmosis and ultrafiltration use films which are distinguished from one another by the size of the pores; in ultrafiltration, the pore diameter is generally in the range from 2 to 2000nm (1nm = 1 nanometre = $10^{-9}$m), while reverse osmosis requires pores below about 2nm in diameter. In all cases it is desirable for the permeable or microporous film to be as thin as possible so as to achieve high flow rates.

Generally a film-forming material is applied to a porous support membrane in an amount sufficient to block any defects in the porous support that might otherwise reduce selectivity.

In order to provide a very thin, but adequately supported, permeable or microporous film, the pores of the support membrane need to be rather fine. Conventionally, an asymmetric ultrafiltration-type organic polymer membrane has been used. However, such membranes have low porosity (often less than 1%) in their skins, which means that the effective area of the composite membrane is low. Additionally, ultrafiltration membranes have defects often up to 1 micron in size. When enough film-forming material is applied to block these, there results a thicker film which tends to reduce the flow rate.

Currently, polymeric permeable or microporous films are often formed of polymers deposited using solvent casting techniques. The polymers that can be used are limited by the requirement that the solvents involved do not significantly degrade the support material. Similarly, the structure of the degrade the support material may be affected if plasma polymerization or curing techniques. heat or ultraviolet radiation, are used.

In one aspect the invention provides a composite membrane comprising a porous inorganic membrane ·which is asymmetric by virtue of having a system of larger pores extending in from one face and a system of smaller pores extending in from the other face, the system of larger pores interconnecting with the system of smaller pores, and at least one permeable or microporous polymer film overlying a face, of the porous membrane, wherein the porous inorganic membrane comprises a porous inorganic support overlain by a layer of a smaller pore-sized sol-gel derived ceramic and the polymer film overlies the sol-gel derived ceramic layer.

In another aspect this invention provides a composite membrane comprising a porous anodic aluminium oxide membrane and at least one permeable or microporous polymer film overlying a face of the porous membrane.

As porous supports, anodic aluminium oxide membranes have a number of advantages over more conventional materials.

It is well known that, when an aluminium substrate is made anodic in an electrolyte having some dissolving power for alumina, a porous oxide film is formed on the surface of the metal, in which the pore diameter and spacing can be controlled by the anodizing voltage and the film thickness by the anodizing time. Over the past ten to fifteen years, techniques have been developed for separating the anodic oxide films from their metal substrate. Mostly, the resulting membranes have pores extending part or all the way through of substantially constant diameter along their length. For example, K.N.Rai and E. Ruckenstein describe (Journal of Catalysis, 40 (1975) 117 to 123) the production of anodic oxide films which are porous by virtue of essentially cylindrical pores extending all the way through. By suitable control of anodizing conditions, it is possible to achieve uniform pore diameters in the range of about 10 to 2000nm.

EPA 178831 describes anodic aluminium oxide membranes having an asymmetric structure. In these membranes, a system of larger pores extends in from one face and a system of smaller pores extends in from the other face the system of larger pores interconnecting with the system of smaller pores, such that the inner ends of one or more smaller pores are joined to the inner end of a larger pore and there are substantially no blind larger pores. These membranes are particularly suitable for use as supports for permeable or microporous films. The small pores extending in from one face can be arranged to have average diameters as low as 2nm, making that face ideal as a support for a very thin active film. But the length of such small pores is very short, because they interconnect with larger pores, so that the porous support membrane nevertheless has low resistance to flow. The asymmetric structure can also be important in controlling the thickness of films deposited from solutions. Viscous drag effects mean that capillary rise is much slower from the small pore side.

Conventional porous anodic oxide membranes have a non-porous barrier layer between the bottoms of the pores and the metal/oxide interface, the thickness of the barrier layer being dependent upon the anodizing voltage. The asymmetric membranes of EPA 178831 are made by a controlled slow voltage reduction technique, designed to thin the barrier layer by the formation in it of progressively finer pores and eventually to dissolve away any remaining barrier layer at the metal/oxide interface.

Other asymmetric porous inorganic membranes have been described in the literature, for example, alumina or other metal oxide membranes made by sol-gel techniques as described by AFM Leenars et al in J.Mat.Sci., 19 (1984) 1077-1088.

The average pore diameter of the porous membrane, at the face where it contacts the permeable or microporous film, should desirably be less than 100nm and preferably less than 30nm or 10nm. Membranes formed by sol-gel techniques can have pore size down to 1nm. In general, the thickness of permeable or microporous film needs to be at least as great as the pore diameter of the support, to ensure that the film is adequately supported. So a membrane support with fine pores enables a thin film to be applied to it.

The porous membrane may itself be composite. For example it may comprise a porous anodic aluminium oxide membrane, either asymmetric or of the conventional sort, or a tape cast membrane and a porous film, e.g. produced by a sol-gel technique overlying one face thereof. Porous membranes of this kind are described in our co-pending EP-A 0 242 208. An advantage of such porous membranes is that they can be arranged to have rather fine pores at the face overlain by the permeable or microporous film.

The nature of the permeable or microporous polymer film is not critical to this invention. Although any film may be used which is currently used in a supported state for the purposes envisaged, two classes of material are particularly contemplated. These are: organic polymer films (included in the term "organic polymer" are polymers based, for example, on silicon which may also contain organic groups see "J.Membrane Science", 22 (1985) pages 257 to 258), which will generally be permeable but non-porous; and polymers of only limited molecular layers thick that can be produced for example by Langmuir-Blodgett techniques.

There is much literature about thin permeable polymer films formed on porous supports. The subject is covered in a review article entitled "Separation of Gases with Synthetic Membranes" by S.L.Matson et al in Chemical Engineering Science, 38.4 (1983) pages 503 to 524. The polymers may be linear or cross-linked or may be produced by plasma polymerisation and may be intended for use above or below their glass transition temperature. An extensive list of polymers is given by way of example in EPA 174918. Application of a film of the polymer to a porous membrane can conveniently be achieved by casting from solution in an organic solvent. It is necessary that the film bridge the pores of the support, but not fill them. Techniques are described in the literature to achieve this, including control over the viscosity of the polymer solution, and pre-immersion of the porous membrane in the solvent. The cast polymer film is advantageously made as thin as possible, subject to the requirement that it effectively bridge all the pores of the support.

Other known techniques for applying films to porous supports include:
- lamination;
- dip coating, spin coating, roller coating into polymer solution, and dry;
- coating with monomer or prepolymer solution, and heat or radiation cure;
- plasma polymerisation;
- interfacial polymerisation at the support surface.

It has been proposed to use cross-linked Langmuir-Blodgett films for separation purposes, e.g. for reverse osmosis, pervaporation and gas separation (K.Heckmann et al, Thin Solid Films, 99 (1983) 265 to 269). Such films may include, for example, stearic acid or a metal stearate, e.g. magnesium stearate, or esters of stearic acid having a polymerizable group, e.g. vinyl stearate. These monomolecular multilayers can also be produced by other techniques. These films, only a few molecules thick, can also be applied to porous membranes to form composite membranes according to this invention.

Although formation of one or more monomer monolayers by dip coating, followed by polymerisation of the monolayers, is possible, it may be preferable to polymerise or cross-link the monolayer in the Langmuir-Blodgett trough prior to dip coating. Repeated dip coating can be used to form a film of desired thickness, generally from 1 nm to 20 nm or more. In pre-polymerised form these films are able to bridge pores substantially wider than the individual films are thick.

The review article by S. L. Matson et al quoted above describes homogeneous films, which may be permeable to gases; and microporous films, through which gases may pass by various mechanisms. Films regarded as microporous generally have a pore size of at least 1nm; films with pores below that size may better be regarded as non-porous but possibly nevertheless permeable. At the outer end of the scale, films regarded as microporous generally have a pore size not substantially greater than the mean free path of the gas in them; films with pores above that size may better be regarded as porous. Depending on gas composition, temperature and pressure, microporous films may have pore sizes ranging up to 100 nm or even more. Applications of composite membranes comprising films generally regarded as permeable but non-porous include reverse osmosis, hyperfiltration, pervaporation and gas separation. Applications of composite membranes comprising microporous films include ultrafiltration, dialysis and diafiltration.

For the preparation of composite membranes according to this invention, porous anodic aluminium oxide membranes, particularly asymmetric membranes as described in EPA 178831 and membranes coated by sol-gel techniques, for example those described in EP-A 0 242 208, have the following advantages:

a) Small pores with narrow pore size distribution. This permits the application of thin films to produce composite membranes with high flow rate. Polymeric ultrafiltration membranes have a much wider pore size distribution.

b) High porosity leading to high flux. The fine pore surface of asymmetric anodic membranes has a porosity of about 20%, while asymmetric polymeric ultrafiltration membranes generally have less than 1% surface porosity.

c) Few defects,leading to high selectivity. For example. asymmetric anodic membranes retain bacteria greater than 0.3 $\mu$m in size, while polymeric ultrafiltration membranes of the same mean pore size are not considered sufficiently perfect to reliably retain such bacteria.

d) Resistance to solvents, temperature and radiation, permitting a wide choice of film materials and application techniques. Such membranes tolerate temperatures in excess of 400°C, UV and other radiation, and a very wide range of organic solvents. Generally polymeric membranes cannot withstand temperatures above 200°C, may be affected by UV radiation, and behave variably in contact with different organic solvents.

e) Smoothness, leading to fewer defects in applied films.

f) Rigidity, reducing deformation under pressure. Polymeric membranes readily deform which can detrimentally affect the structure and performance of composite membranes formed from them.

In the Examples which follow unless otherwise stated,the porous inorganic membranes were asymmetric anodic oxide membranes prepared by the technique of EPA 178831. The membranes were approximately 60 $\mu$m thick and had a system of larger pores (approximately 200 nm) extending in from one face and interconnecting with a system of smaller pores (approximately 25 nm) extending in from the other face. Unless otherwise stated, the permeable or microporous film was applied to the small pore face of the membrane.

## EXAMPLE 1

This describes the preparation of composite membranes by interfacial polymerisation.

Asymmetric anodic films were dipped in a 0.33% aqueous solution of polyethyleneimine (PEI), drained and then immersed in a 1% solution of terephthaloyl chloride in hexane for 1 minute to cross-link the polymer. Samples were allowed to dry and then cured at 120°C for 10 min.

Examination using a scanning electron microscope typically showed a 0.4 um thick PEI layer, but the very thin condensed film could not be resolved. There was some evidence of the coating penetrating about 0.1 um into the fine pores (about 25 nm diameter) of the separated anodic film. It also appeared to cover the mouths of the wider pores (about 0.2 um diameter) at the opposite face.

## EXAMPLE 2

A composite membrane prepared following example 1 was used as a semipermeable membrane separating two cells, one containing water and the other containing dilute copper sulphate solution to a similar level. The change in solution level and copper ion concentration in the two cells were monitored over 22 h. The change in solution level was equivalent to water permeation at 0.068 ml/cm².h. The absorbance at 810 nm due to copper ions was determined using a spectrophotometer. This fell from 0.371 to 0.313 in the copper sulphate solution, and increased from zero to 0.002 in the water.

Thus, water permeated through the membrane driven by the osmotic pressure, while the copper sulphate was largely retained. It is anticipated that these membranes would be useful for reverse osmosis.

## EXAMPLE 3

A composite membrane prepared following example 1 was placed in the double cell apparatus with one cell containing water, and the other cell containing a water, 21.3% ethanol mixture. After 4¼ h water had permeated into the water/ethanol mixture at 0.38 ml/cm².h. A very low level of ethanol was detected chromatographically in the cell originally containing just water. This was equivalent to a permeation rate of 0.025 ml/cm².h.

## EXAMPLE 4

A composite membrane prepared following example 1 was used in the double cell apparatus separating methanol from propanol. After 1¼ hours there was a net increase in volume of 8.5 ml in the half-cell containing propanol. This represents a net permeability of 1.6 ml/cm².h. Gas chromatography was used to determine the compositions in the two half cells, and the proportions of propanol and methanol are given below.

|  | Propanol | Methanol |
| --- | --- | --- |
| Propanol side | 99.1% | 0.85% |
| Methanol side | 0.28% | 99.7% |

These data indicate selective permeability of methanol, suggesting that the composite membrane may be useful for pervaporation to separate alcohols.

## EXAMPLE 5

This describes the preparation of a composite membrane by plasma polymerisation.

Asymmetric anodic films were coated by exposure to a plasma generated from trifluoromethane monomer. This was carried out in a plasma etcher (Model No. PE80) manufactured by Plasma Technology Ltd. The anodic films were placed on the lower electrode near the gas inlet port. Electrodes of aluminium were 30 cm diameter with 5 cm separation. After evacuation to about $1.333 \cdot 10^{-3}$ mbar ($10^{-3}$ torr) for 30 minutes, the samples were exposed to argon plasma [107 kHz, 0.266 mbar (0.2 torr), 140 W] for 10 minutes, and then to $CHF_3$ plasma [107 kHz, 0.266 mbar (0.2 torr), 200W, 1.1A] for about 20 minutes with a $CHF_3$ flow rate of 100cm$^3$/min.

## EXAMPLE 6

A composite membrane prepared following example 5 was tested for gas permeability. It was placed in a cell with a feed gas passing across one surface at 40 ml/min, and a carrier gas passing across the other surface at 85 ml/min. The feed gas was a mixture of helium and the gas for which the permeability was to be assessed. The carrier gas was also helium. Total pressures on either side of the membrane were equalised. The cell was maintained at 21°C. A mass spectrometer was used to determine the proportion of either oxygen, nitrogen, carbon dioxide or methane in the feed and permeate streams. These data were compared to those obtained similarly for an uncoated separated anodic film.

For both uncoated and coated separated porous anodic membranes there appeared to be a linear relationship between the proportion of gas in the permeate and feed streams for 12 to 100% in the feed stream. The ratios of the proportion of gas in the permeate for the composite membrane to that for the uncoated separated anodic film were 0.25 for oxygen, 0.29 for nitrogen, 0.42 for carbon dioxide and 0.26 for methane. Whereas there is little difference in the results for oxygen, nitrogen and methane, the composite membrane appears to be selectively permeable to carbon dioxide. Thus it may have application for the removal of carbon dioxide from a mixture with hydrocarbons. When the feed stream consisted of 100% carbon dioxide, the permeate contained 5.6% carbon dioxide.

## EXAMPLE 7

A composite membrane prepared following example 5 was fixed to the end of a glass tube using an epoxy adhesive. 10 ml of ethanol was placed in the tube and the top was covered to prevent evaporation. Gas chromatography was used for the analysis. The end of the tube with the membrane was immersed in a beaker containing 150 ml of water. After 24h the concentration of ethanol in the tube was 99% relative to the initial concentration. This difference is not significant. However, ethanol had permeated through the membrane into the water at a rate of 0.07 ml/cm$^2$.h.

The membrane is hydrophobic and was expected to be not significantly permeable to water. The experiment indicates selective permeation of ethanol.

## EXAMPLE 8

This describes the preparation of a composite membrane by plasma polymerisation.

Deposition onto a separated anodic film was performed in a tubular reactor, 25 cm long by 5 cm diameter, to which the 13.56 MHz ratio frequency power was inductively coupled via a 9-turn copper coil externally wound over 10 cm. Trifluoroethylene was introduced into the reactor at 0.47 cm$^3$ (S.T.P)/min while a vacuum pump maintained a pressure of 0.06 mbar. 10 W power was applied for 10 min with the separated anodic film placed 6 cm before the coil.

A scanning electron microscope examination revealed a 0.14 um thick coating on the surface of the separated anodic film, again without evidence of a deposit within the 25 nm diameter pores of the substrate.

## EXAMPLE 9

A composite membrane prepared following example 8 was tested for gas permeability. The membrane was placed in a permeation cell with an Argon feed gas passing over one surface at 25 ml/min and an Argon carrier gas passing the other surface at 100 ml/min (all measurements corrected to s.t.p.). Total pressures on each side of the membrane were equalised before introducing a stream of either oxygen, nitrogen, hydrogen, carbon dioxide or methane (flow rates from 5 to 10 ml/min) into the feed gas. A mass spectrometer was used to determine the proportion of each gas in the feed and permeate streams while the pressure difference across the membrane due to the added gas was monitored.

Permeability data and gas flux through the membrane are given in the table below. The results indicate that these composite membranes enable a very high flux of gas to be reached.

| Gas | Permeability $m^3$ (STP)m $m^{-2}$ $s^{-1}$ $kPa^{-1}$ | Flux* $m^3$ $s^{-1}$ $m^{-2}$ $kPa^{-1}$ |
|---|---|---|
| $O_2$ | $1.3 \times 10^{-10}$ | $9.3 \times 10^{-4}$ |
| $N_2$ | $1.9 \times 10^{-10}$ | $1.4 \times 10^{-3}$ |
| $CO_2$ | $1.7 \times 10^{-10}$ | $1.2 \times 10^{-3}$ |
| $CH_4$ | $1.7 \times 10^{-10}$ | $1.2 \times 10^{-3}$ |
| $H_2$ | $4 \times 10^{-10}$ | $3 \times 10^{-3}$ |

\* Flux measurements are corrected for unit membrane area and 1 kPa partial pressure difference.

The membranes show high permeability to $H_2$ and may be useful for hydrogen separation. The membranes also exhibit a selectivity for nitrogen compared to oxygen which may be of use in air separation.

## EXAMPLE 10

This describes the preparation of a composite membrane by depositing monomolecular multilayers on the surface of separated anodic films using a Langmuir-Blodgett technique.

Pentacosa-10,12-diynoic acid was prepared by standard methods (B. Tieke, G. Wegner, D. Naegela and H. Ringsdorf, Angew. Chem. Int. Ed. Engl., 15, 764 (1976); B. Tieke and G. Wegner in "Topics in Surface Chemistry", Plenum, New York, 1978, p. 121; B. Tieke, G. Leiser and G. Wegner, J. Polym. Sci., Polym. Chem. Ed., 17, 1631 1979)). The multilayers were deposited using a 1000 cm2 Langmuir trough supplied by Nima Technology Ltd. This has provision for maintaining a constant surface pressure during deposition. The subphase in the trough was a 0.005 mol/l high purity aqueous solution of cadmium chloride adjusted to pH 6.0 and held at 20°C.

Initially, the separated anodic film was immersed through the surface of the subphase. A monolayer of the diacetylene monomer was spread from a 1 mg/ml solution in a 4:1 hexane/chloroform mixture, compressed to 25 mN/m and polymerized by exposure to 254 nm ultraviolet light for 10 minutes. The first monolayer of polymerized diacetylene was deposited by raising the anodic film vertically at 5 mm/min through the surface. The surface pressure was kept constant at 25 mN/m during deposition. Using the procedure described above, a new polymerized monolayer of diacetylene was prepared on the subphase, and two further layers were deposited onto the dry anodic film by dipping at 5 mm/min. Fresh polymerized monolayers were prepared prior to deposition on the 4th, 6th, 8th etc., layers onto the anodic film.

A scanning electron microscope examination revealed a 11-layer thick coating to be about 20 nm thick and suspended over the 25 nm diameter pores of the anodic film.

## EXAMPLE 11

Composite membranes were prepared following example 10. One sample A had 11 layers deposited on it giving a hydrophobic surface, and was used to separate ethanol from water. The other sample B, had 10 deposited layers rendering it hydrophilic, and was used to separate water from an ethanol/water mixture. The table shows the results of the permeation tests.

| Sample | Test Time hrs | Permeation of $H_2O$ into EtOH | Permeation of EtOH into $H_2O$ |
|---|---|---|---|
| A | 24 | not detectable | $0.04$ ml/cm$^2$ . h |
| B | 6 | $0.17$ ml/cm$^2$ . h | $0.05$ ml/cm$^2$ . h |

Diffusion of ethanol appears unaffected by the nature of the membrane surface. However, water permeation is substantially influenced by surface wettability. Both of these membranes exhibit selectivity which may be useful for pervaporation processes.

## EXAMPLE 12

A separated anodic film was prepared with an alumina coating produced on its surface using sol/gel techniques. Using this a composite membrane was produced by applying the interfacial polymerisation method of example 1. From an electronoptical examination the PEI layer appeared similar to that of exam-

ple 1, except that it was only 0.2 μm thick.

The composite membrane was used as in example 3. The water permeation rate was 0.27 ml/cm2.h., while that for ethanol was 0.02 ml/cm2.h. The selectivities were essentially similar to example 3.

EXAMPLE 13

A composite membrane similar to that of example 12 was used in the manner described in example 2. Water permeated into the copper sulphate solution at 0.054 ml/cm2.h., while no copper ions were detected in the cell containing water. It appears that this membrane offers superior ionic retention to that of example 2 coupled with slow water diffusion. This may reflect the degree of perfection of the membranes.

EXAMPLE 14

Composite membranes were prepared following example 10 with 11 layers deposited upon the surface to produce a uniform 0.02 μm thick coating. These samples were tested for gas permeability using a method similar to that outlined in example 9. Flow rates and measurement techniques were also as given in example 9.

The results for permeability and gas flux through the composite membrane for nitrogen, oxygen, carbon dioxide and methane are given in the table below:

| Gas | Permeability $m^3$ (STP) m $m^{-2}$ $s^{-1}$ $kPa^{-1}$ | Flux* $m^3$ $s^{-1}$ $m^{-2}$ $kPa^{-1}$ |
|---|---|---|
| $O_2$ | $5.5 \times 10^{-10}$ | $7.7 \times 10^{-4}$ |
| $N_2$ | $7.5 \times 10^{-10}$ | $1.1 \times 10^{-3}$ |
| $CO_2$ | $1.1 \times 10^{-9}$ | $1.6 \times 10^{-3}$ |
| $CH_4$ | $1.7 \times 10^{-9}$ | $2.5 \times 10^{-3}$ |
| * Flux is corrected to standard unit membrane area and 1 kPa partial pressure difference | | |

For all gases, the composite membrane showed high flux with excellent gas permeability. The selectivity of the membrane for $CH_4$ over $CO_2$ and $N_2$ over $O_2$ indicates that it may be useful for biogas processing and air separations respectively.

EXAMPLE 15

165 g of alumina and 0.42 g of magnesia were slurried in a liquid system composed of 78 g trichloroethylene, 32 g of ethanol, 3.8 g of corn oil, 8.4 g of polyvinyl butyral and 14.2 g of polyethylene glycol. The slurry was cast on a glass substrate, using a doctor blade, into a film of width 173 mm, which was dried in air to yield a flexible tape of thickness 0.14 mm. Discs of diameter 26 mm were cut from the tape and partially sintered to produce a porous ceramic material of average pore size 0.3 μm. The discs were pretreated by immersion for 5 seconds in a 5% solution of sodium metasilicate, and subsequently spray coated with a viscous boehmite sol of concentration 15 gl⁻¹ in which the water had been replaced by diethylene glycol. The coated porous substrate was heated for 1 hour at 450°C to transform the gel layer into a stable γ-$Al_2O_3$ film containing pores of slit width 4.2 nm.

An aqueous boehmite sol of concentration 30 gl⁻¹ was subsequently deposited upon the first sol-gel layer by spray coating. This was followed by heating for 1 hour at 450°C, which produced a stable γ-$Al_2O_3$ film of pore slit width 2.8 nm.

Using this porous support membrane, a composite membrane was produced by applying the interfacial polymerization method of example 1. This was used as in example 3. The water permeation rate was 0.2 ml/cm2.h, while that for ethanol was 0.02 ml/cm2.h. These rates are very similar to those in examples 1 and 12, where the same type of thin polymer film was used but on different supports.

**Claims**

1. A composite membrane comprising a porous inorganic membrane which is asymmetric by virtue of having a system of larger pores extending in from one face and a system of smaller pores extending in from the other face, the system of larger pores interconnecting with the system of smaller pores, and at least one permeable or microporous polymer film overlying a face of the porous membrane, wherein the porous inorganic membrane comprises a porous inorganic support overlain by a layer of a smaller pore-sized sol-gel derived ceramic and the polymer film overlies the sol-gel derived ceramic layer.

2. A composite membrane comprising a porous anodic aluminium oxide membrane and at least one per-

EP 0 242 209 B1

meable or microporous polymer film overlying a face of the porous membrane.

3. A composite membrane as claimed in claim 2, wherein the porous anodic aluminium oxide membrane is asymmetric by virtue of having a system of larger pores extending in from one face and a system of smaller pores extending in from the other face, the system of larger pores interconnecting with the system of smaller pores.

4. A composite membrane as claimed in claim 1, wherein the porous membrane is of alumina.

5. A composite membrane as claimed in any one of claims 1 to 4, wherein the permeable or microporous film overlies the small-pore face of the porous membrane.

6. A composite membrane as claimed in any one of claims 1 to 5, wherein the average pore diameter of the porous membrane, at the surface overlain by the permeable or microporous film, is from 1 to 100 nm.

7. A composite membrane as claimed in any one of claims 1 to 6, wherein the film is of a permeable non-porous organic polymer.

8. A composite membrane as claimed in any one of claims 1 to 6, wherein the film has been applied by a Langmuir-Blodgett technique.

9. A composite membrane as claimed in claim 7, wherein the film has been applied to the membrane by plasma polymerisation.

10. A composite membrane as claimed in claim 7, wherein the film has been applied to the membrane by interfacial polymerisation at the membrane surface.

11. A separation device comprising the composite membrane of any one of claims 1 to 10.

## Patentansprüche

1. Verbundmembran, umfassend eine poröse anorganische Membran, die aufgrund eines Systems von grösseren Poren, die sich von einer Seite erstrecken, und eines Systems von kleineren Poren, die sich von der anderen Seite erstrecken, asymmetrisch ist, wobei das System der grösseren Poren mit dem System der kleineren Poren verbunden ist, und wenigstens einen durchlässigen oder mikroporösen Polymerfilm aufweist, welcher auf einer Seite der porösen Membran aufliegt, wobei die poröse anorganische Membran einen porösen anorganischen Träger umfasst, auf dem eine Schicht einer die kleinere Porengrösse aufweisenden, von einem Sol-Gel abgeleiteten Keramik liegt und der Polymerfilm über der von einem Sol-Gel abgeleiteten Keramikschicht liegt.

2. Verbundmembran, umfassend eine poröse anodische Aluminiumoxidmembran und wenigstens einen durchlässigen oder mikroporösen Polymerfilm, der auf einer Seite der porösen Membran aufliegt.

3. Verbundmembran gemäss Anspruch 2, in welcher die poröse, anodische, poröse Aluminiumoxidmembran aufgrund eines Systems von grösseren Poren, die sich von einer Seite erstrecken, und eines Systems von kleineren Poren, die sich von der anderen Seite erstrecken, asymmetrisch ist und das System der grösseren Poren mit dem System der kleineren Poren verbunden ist.

4. Verbundmembran gemäss Anspruch 1, in welcher die poröse Membran aus Aluminiumoxid besteht.

5. Verbundmembran gemäss einem der Ansprüche 1 bis 4, in welcher der durchlässige oder mikroporöse Film auf der Seite mit den kleineren Poren der porösen Membran aufliegt.

6. Verbundmembran gemäss einem der vorhergehenden Ansprüche 1 bis 5, in welcher der durchschnittliche Porendurchmesser der porösen Membran an der Oberfläche, auf welcher der durchlässige oder mikroporöse Film aufliegt, von 1 bis 100 nm beträgt.

7. Verbundmembran gemäss einem der Ansprüche 1 bis 6, in welcher der Film aus einem durchlässigen, nicht-porösen, organischen Polymer besteht.

8. Verbundmembran gemäss einem der Ansprüche 1 bis 6, in welcher der Film durch eine Langmuir-Blodgett-Technik aufgetragen worden ist.

9. Verbundmembran gemäss Anspruch 7, in welcher der Film auf die Membran durch Plasmapolymerisation aufgebracht wurde.

10. Verbundmembran gemäss Anspruch 7, in welcher der Film auf die Membran durch Grenzflächenpolymerisation an der Membranoberfläche aufgebracht wurde.

11. Eine Trennvorrichtung, umfassend die Verbundmembran gemäss einem der Ansprüche 1 bis 10.

## Revendications

1. Membrane composite comprenant une membrane minérale poreuse qui est asymétrique du fait qu'elle a un système de pores plus gros qui s'étend depuis une face et un système de pores plus petits qui s'étend depuis l'autre face, le système de pores plus gros étant relié au système de pores plus petits, et au moins un film polymère perméable ou microporeux recouvrant une face de la membrane poreuse, dans laquelle la membrane minérale poreuse comprend un support minéral poreux recouvert par une couche de céramique provenant d'un gel-sol de taille de pores plus petite et le film polymère recouvre la couche de céramique dérivée d'un gel-sol.

2. Membrane composite comprenant une membrane d'oxyde d'aluminium anodique poreux et au moins un film polymère microporeux ou perméable recouvrant une face de la membrane poreuse.

3. Membrane composite selon la revendication 2, dans laquelle la membrane d'oxyde d'aluminium anodique poreux est asymétrique du fait qu'elle a un système de pores plus gros s'étendant depuis une face

8

et un système de pores plus petits s'étendant depuis l'autre face, le système de pores plus gros étant relié au système de pores plus petits.

4. Membrane composite selon la revendication 1, dans laquelle la membrane poreuse est en alumine.

5. Membrane composite selon l'une quelconque des revendications 1 à 4, dans laquelle le film perméable ou microporeux recouvre la face à petits pores de la membrane poreuse.

6. Membrane composite selon l'une quelconque des revendications 1 à 5, dans laquelle le diamètre moyen de pore de la membrane poreuse, à la surface revêtue par le film perméable ou microporeux, est compris entre 1 et 100 nm.

7. Membrane composite selon l'une quelconque des revendications 1 à 6, dans laquelle le film est en polymère organique perméable non poreux.

8. Membrane composite selon l'une quelconque des revendications 1 à 6, dans laquelle le film a été appliqué par une technique de Langmuir-Blodgett.

9. Membrane composite selon la revendication 7, dans laquelle le film a été appliqué sur la membrane par polymérisation par plasma.

10. Membrane composite selon la revendication 7, dans laquelle le film a été appliqué sur la membrane par polymérisation interfaciale à la surface de la membrane.

11. Dispositif de séparation comprenant la membrane composite de l'une quelconque des revendications 1 à 10.